Europäisches Patentamt

European Patent Office

Office européen des brevets

(11) Numéro de publication: **0 192 509**
**B1**

(12) **FASCICULE DE BREVET EUROPÉEN**

(45) Date de publication du fascicule du brevet:
**13.09.89**

(21) Numéro de dépôt: **86400098.9**

(22) Date de dépôt: **20.01.86**

(51) Int. Cl.⁴: **A 01 J  11/12**

(54) **Procédé et dispositif pour la préparation du lait destiné à la fabrication du fromage.**

(30) Priorité: **07.02.85  FR 8501700**

(43) Date de publication de la demande:
**27.08.86 Bulletin 86/35**

(45) Mention de la délivrance du brevet:
**13.09.89 Bulletin 89/37**

(84) Etats contractants désignés:
**AT DE IT NL**

(56) Documents cité:
**DE-C-18 542**
**DE-U-1 906 788**
**US-A-1 512 908**

(73) Titulaire: **PIERRE GUERIN S.A., B.P. 12, F-79210 Mauze sur le Mignon (FR)**

(72) Inventeur: **Vautier, Claude, 28, Rue de l'Ile, F-79270 Frontenay Rohan- Rohan (FR)**

(74) Mandataire: **Fontanié, Etienne, FIVES- CAIL BABCOCK 38, rue de la République, F-93107 Montreuil Cédex (FR)**

EP 0 192 509 B1

## Description

La présente invention concerne la préparation du lait destiné à la fabrication du fromage. Pour la fabrication de certains fromages le lait est laissé au repos pendant un certain temps dans une cuve, puis il est écrémé pour enlever la couche de crème qui est montée à la surface.

L'écrémage améliore fortement la qualité bactériologique du lait en particulier parce qu'il permet d'éliminer les germes psychrotrophes développés pendant le temps de stockage à froid dans les réservoirs des fermes et qui renferment des enzymes protéolytiques qui provoquent des rancissements et donnent des goûts amers. Il permet donc d'obtenir un fromage de meilleure qualité et pouvant se conserver plus longtemps.

La couche de crème qui surnage et renferme la majorité des germes indésirables ne représente que 3 à 4 % du volume total mais est très concentrée en matières grasses. Il est essentiel de pouvoir la récupérer en totalité et sans qu'elle se remélange avec les couches inférieures moins riches en matières grasses pour pouvoir la transformer directement en beurre.

Actuellement le lait est écrémé "à la poche" c'est-à-dire manuellement au moyens d'une louche. Lorsque le volume de lait mis en oeuvre est important cette opération est longue et son efficacité dépend de l'habileté de l'opérateur.

On connaît (DE-A-18 542) un procédé pour l'écrémage du lait laissé au repos dans une cuve suivant lequel la crème est séparée du lait au moyen d'une cuvette collectrice disposée dans la cuve et qui est reliée à une tuyauterie d'évacuation et dont le bord supérieur affleure la surface supérieure de la couche de crème, en balayant la crème de façon à la déplacer vers la cuvette et en déplaçant verticalement la cuvette par rapport à la couche de crème. Pour la mise en oeuvre de ce procédé, on utilise une cuve rectangulaire équipée d'une cuvette collectrice fixée à l'extrémité supérieure d'un tuyau vertical dont la position en hauteur est réglable et qui est placé à une extrémité de la cuve et d'un racleur disposé transversalement et déplaçable longitudinalement sur la cuve. Ces moyens ne permettent pas d'obtenir un écoulement calme et régulier de la crème vers la cuvette.

Le but de la présente invention est d'augmenter la rapidité et l'efficacité de l'écrémage.

Conformément à l'invention, on place la cuvette collectrice au centre de la cuve et on balaye la crème au moyen de pales rotatives conformées de façon à déplacer la crème de la périphérie vers le centre de la cuve en maintenant le bord inférieur des pales approximativement au même niveau que le bord supérieur de la cuvette, la vitesse de rotation des pales et la vitesse de déplacement vertical étant suffisamment faibles pour ne pas créer dans la couche de crème une agitation susceptible de remélanger la crème et le lait.

Le déplacement relatif peut être réalisé en faisant descendre dans la cuve la cuvette collectrice et les pales rotatives à vitesse lente et régulière. En variante on peut laisser la cuvette et les pales ait niveau initial de la surface supérieure de la couche de crème et admettre à faible débit du lait frais, éventuellement écrémé, dans le fond de la cuve pour soulever la couche de crème.

Pour la mise en oeuvre de ce procédé on utilise une cuve cylindrique, à section circulaire et à axe vertical et un dispositif comprenant une cuvette collectrice disposée dans la cuve et reliée à une tuyauterie d'évacuation, des moyens pour balayer la crème de façon à la déplacer vers la cuvette collectrice et des moyens pour assurer le déplacement vertical relatif de la cuvette collectrice et de la couche de crème, ce dispositif étant caractérisé en ce que la cuvette collectrice est placée au centre de la cuve et dans sa partie supérieure, en ce que lesdits moyens de balayage sont constitués par des pales rotatives dont l'axe de rotation est confondu avec l'axe de la cuve et dont le bord inférieur est situé dans un plan horizontal et sensiblement au même niveau que le bord supérieur de ladite cuvette, ces pales étant courbées de telle sorte qu'elles déplacent la crème de la périphérie vers le centre de la cuve lorsqu'elles tournent, et en ce que la cuvette et les pales rotatives sont montées sur un support commun.

La cuvette et les pales peuvent être portées par un arbre vertical suspendu au couvercle de la cuve, entraîné en rotation par un moteur monté sur ledit couvercle et déplaçable verticalement par un vérin mécanique, hydraulique ou pneumatique à commande manuelle ou automatique.

Un orifice de remplissage peut être prévu dans le fond de la cuve.

La cuve peut être calorifugée et équipée d'un système de refroidissement par circulation d'eau constitué, par exemple, par un conduit enroulé en hélice autour de la cuve ou par une double enveloppe.

D'autres caractéristiques de l'invention apparaîtront à la lecture de la description qui suit et se réfère aux dessins l'accompagnant qui montrent, à titre d'exemple nonlimitatif, un mode de réalisation de l'invention et sur lesquels:

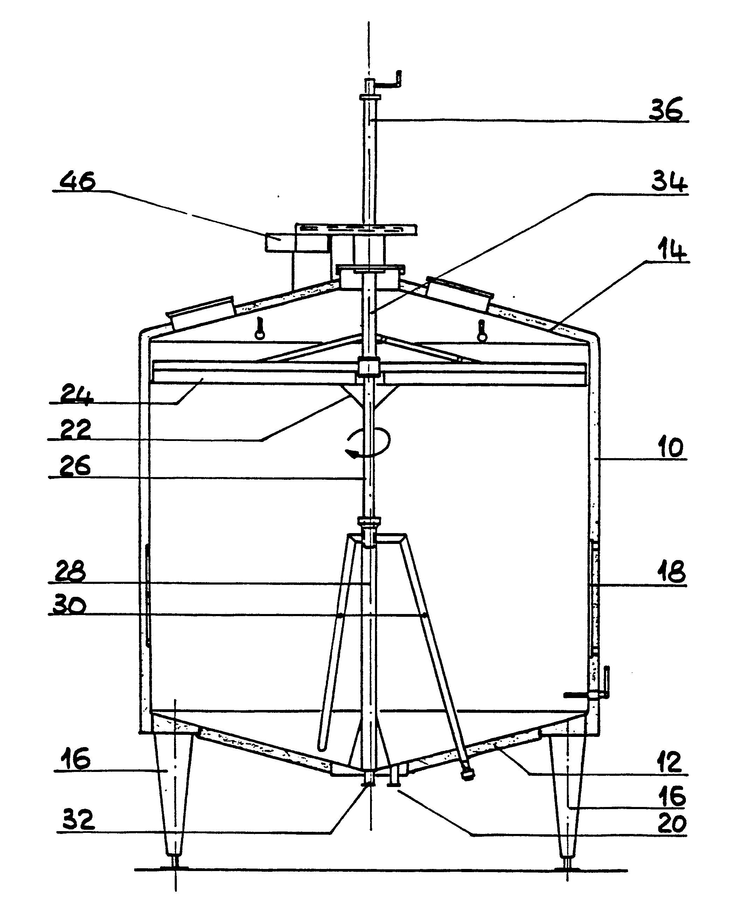

La figure 1 montre en élévation et en coupe une cuve équipée d'un dispositif d'écrémage conforme à l'invention;

La figure 2 est une coupe transversale de la cuve, et

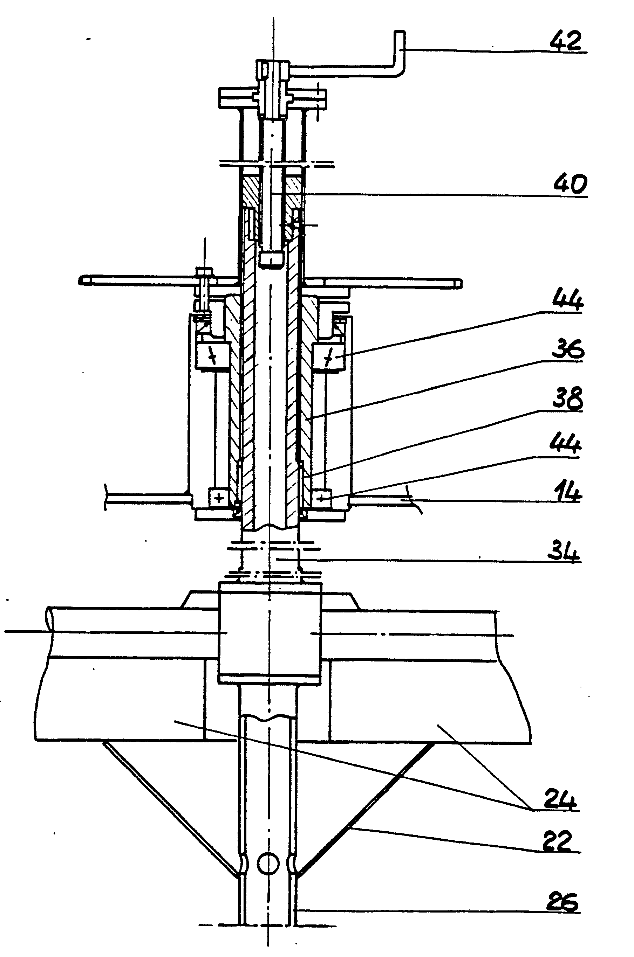

La figure 3 est une vue en coupe, à plus grande échelle, du mécanisme commandant les mouvements verticaux du dispositif d'écrémage.

La cuve 10 représentée sur les dessins est cylindrique, à section circulaire et à axe vertical. Elle est munie d'un fond et d'un couvercle coniques 12, 14 et repose sur le sol par l'intermédiaire de quatre pieds 16. Un système de refroidissement 18 est prévu dans la partie inférieure de la cuve peut être constitué, par exemple, par un conduit plat enroulé en hélice autour de la paroi de la cuve et dans lequel on peut faire circuler un liquide réfrigérant. Un orifice de remplissage et de vidange 20 est prévu sur le fond de la cuve, pratiquement à son point le plus bas. La cuve est entièrement calorifugée.

Le dispositif d'écrémage équipant la cuve est constitué par une cuvette en forme d'entonnoir 22 et par des bras horizontaux 24 fixés à l'extrémité supérieure d'un tube vertical 26 agencé télescopiquement dans un tube inférieur 28 fixé sur le fond de la cuve, en son centre, et soutenu par des étais 30. Des trous percés dans le tube 26, près du fond de la cuvette 22, permettent l'évacuation de la crème collectée par la cuvette par le tube 26, le tube 28 et un orifice de sortie 32. Les bras 24 qui s'étendent jusqu'à la paroi de la cuve sont courbes et munis de pales dont le bord inférieur est situé dans un plan horizontal sensiblement au même niveau que le bord de la cuvette 22.

La cuvette 22 et les bras 24 sont suspendus au couvercle de la cuve par l'intermédiaire d'un arbre vertical tubulaire 34 fixé à l'extrémité supérieure du tube 26. Cet arbre est monté coulissant dans un fourreau 36 et rendu solidaire en rotation de celui-ci par un manchon cannelé 38. L'arbre 34 est muni à son extrémité supérieure d'un écrou qui est vissé sur une barre filetée 40 montée rotative sur une bride fixée à l'extrémité supérieure du fourreau 36. En faisant tourner la barre 40 au moyen d'une manivelle 42, on règle la position en hauteur du système d'écrémage. Le fourreau 36 est monté rotatif sur le couvercle de la cuve au moyen de roulements 44, et un groupe moto-réducteur 46 permet de l'entraîner en rotation avec l'arbre 34, les bras 24 et la cuvette 22.

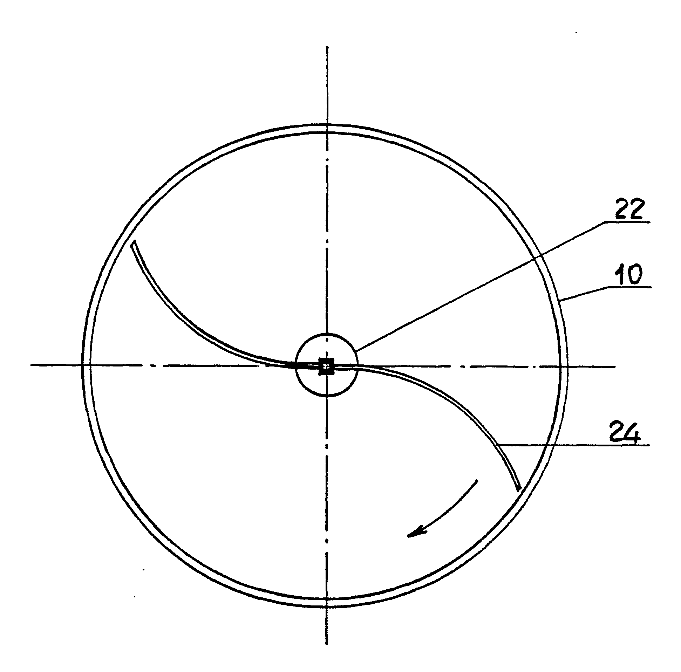

Avant de remplir la cuve on place le système d'écrémage dans sa position supérieure. La cuve n'est pas remplie complètement de façon que la surface libre du lait soit située à un niveau inférieur du bord de la cuvette 22. En laissant reposer le lait, il se forme une couche supérieure de crème qu'il faut séparer du lait et récupérer. Pour cela on fait descendre la cuvette 22 et les bras 24 jusqu'à ce que le bord inférieur des pales affleure la surface supérieure de la couche de crème, puis on met en marche le groupe moteur 46 pour faire tourner lentement les bras 24 et simultanément on fait descendre progressivement l'ensemble de la cuvette et des bras en tournant la manivelle 42. Les bras tournent dans le sens indiqué par la flèche sur la figure 2 de sorte que, grâce à leur forme courbe, la crème est poussée vers le centre de la cuve et se déverse dans la cuvette 22 d'où elle est évacuée par les tubes 26 et 28. Lorsque le bord inférieur de la cuvette atteint le niveau de séparation crème-lait, on arrête le dispositif d'écrémage et on peut alors soutirer le lait. La vitesse de descente de l'ensemble cuvette-pales est comprise entre 5 et 30 millimètres/minute et la vitesse périphérique de l'extrémité des pales est comprise entre 5 et 30 centimètres/seconde.

Au lieu d'être actionné manuellement, le système à vis et écrou assurant les mouvements verticaux du dispositif d'écrémage pourrait être actionné par un moteur ou remplacé par un vérin. L'opération d'écrémage pourrait être entièrement automatisée en utilisant des indicateurs de niveau pour détecter la surface libre de la couche de crème et l'interface crème-lait.

En variante, on pourrait aussi, après avoir descendu le dispositif d'écrémage de façon que le bord supérieur de la cuvette et le bord inférieur des pales des bras rotatifs affleurent la surface supérieure de la couche de crème et mis les bras en rotation, maintenir le dispositif dans cette position et admettre du lait frais dans la cuve par l'orifice 20. Cette admission, à faible débit, d'un volume supplémentaire de lait aura pour effet de soulever lentement la couche de crème et de permettre son évacuation comme décrit plus haut. L'admission de lait frais sera arrêtée lorsque l'interface crème-lait atteindra le bord supérieur de la cuvette.

**Revendications**

1. Procédé pour la préparation de lait destiné à la fabrication du fromage suivant lequel on laisse reposer le lait dans une cuve pour qu'il se forme une couche de crème à la surface du lait et on sépare la crème du lait, au moyen d'une cuvette collectrice disposée dans la cuvette qui est reliée à une tuyauterie d'évacuation et dont le bord supérieur affleure la surface supérieure de la couche de crème, en balayant la crème de façon à la déplacer vers la cuvette collectrice et en assurant le déplacement vertical relatif de la cuvette collectrice et de la couche de crème, caractérisé en ce qu'on place la cuvette collectrice (22) au centre de la cuve et en ce qu'on balaye la crème au moyen de pales rotatives (24) conforméés de façon à déplacer la crème de la périphérie vers le centre de la cuve, en maintenant le bord inférieur des pales approximativement au même niveau que le bord supérieur de la cuvette, la vitesse de rotation des pales et la vitesse de déplacement vertical étant suffisamment faibles pour ne pas créer dans la couche de crème une agitation susceptible de remélanger la crème et le lait.

2. Procédé selon la revendication 1, caractérisé en ce qu'on fait descendre la cuvette et les pales rotatives (24) dans la cuve à une vitesse lente et régulière.

3. Procédé selon la revendication 1, caractérisé en ce qu'on maintient la cuvette (22) et les pales rotatives (24) au niveau initial de la couche de crème et on admet du lait frais à faible débit dans le fond de la cuve pour soulever lentement la couche de crème.

4. Dispositif pour la mise en oeuvre du procédé selon la revendication 1, 2 ou 3, installé dans une cuve cylindrique (10) à section circulaire et à axe vertical et comprenant une cuvette collectrice disposée dans la cuve et reliée à une tuyauterie d'évacuation, des moyens pour balayer la crème de façon à la déplacer vers la cuvette collectrice,

et des moyens pour assurer le déplacement vertical relatif de la cuvette collectrice et de la couche de crème, caractérisé en ce que la cuvette collectrice (22) est placée au centre de la cuve (10) et dans sa partie supérieure, en ce que lesdits moyens de balayage sont constitués par des pales rotatives (24) dont l'axe de rotation est confondu avec l'axe de la cuve et dont le bord inférieur est situé dans un pl an horizontal et sensiblement au même niveau que le bord supérieur de ladite cuvette, ces pales étant courbées de telle sorte qu'elles déplacent la crème de la périphérie vers le centre de la cuve lorsqu'elles tournent, et en ce que la cuvette et les pales rotatives sont montées sur un support commun (34).

5. Dispositif selon la revendication 4, caractérisé en ce que ledit support commun est constitué par un arbre vertical (34) suspendu au couvercle (14) de la cuve, entraîné en rotation par un moteur (46) monté sur ledit couvercle et déplaçable verticalement au moyen d'un vérin à commande manuelle ou automatique (40, 42).

6. Dispositif selon la revendication 4 ou 5, caractérisé en ce qu'un orifice de remplissage (20) est prévu dans la partie inférieure de la cuve.

## Patentansprüche

1. Verfahren zur Behandlung von zur Käseherstellung bestimmter Milch, gemäss dem die Milch zwecks Bildung einer Rahmschicht an der Milchoberfläche in einer Wanne stehen gelassen wird und die Trennung des Rahms von der Milch mittels einer in der Wanne angeordneten und an eine Abflussleitung angeschlossenen Sammelschale erfolgt, deren oberer Rand mit der Oberfläche der Rahmschicht in Berührung kommt, dabei erfolgt das Astreifen des Rahms so, dass er zur Sammelschale hin geschoben wird, wobei eine vertikale Relativbewegung der Sammelschale und der Rahmschicht erzeugt wird, dadurch gekennzeichnet, dass die Sammelschale (22) in der Mitte der Wanne (10) angeordnet ist, und dass der Rahm mit Hilfe von Drehflügeln (24) abgestriffen wird, die so ausgebildet sind, dass der Rahm vom Umfang der wanne zu ihrer Mitte hin geschoben wird, wobei die Unterkante der Flügel ungefähr auf derselben Höhe gehalten wird die der obere Rand der Schale und die Drehzahl der Flügel und die vertikale Bewegungsgeschwindigkeit niedrig genug sind, um die Rahmschicht nicht aufzurühren was zu erneuter Vermischung von Rahm und Milch führen könnte.

2. Verfahren gemäss Anspruch 1, dadurch gekennzeichnet, dass die Schale (22) und die Drehflügel (24) langsam und gleichmässig in der Wanne abgesenkt werden.

3. Verfahren gemäss Anspruch 1 dadurch gekennzeichnet, dass man die Schale (22) und die Drehflügel (24) auf der ursprünglichen Höhe der Rahmschicht hält und am Boden der Wanne Frischmilch mit geringem Durchsatz zu führt um die Rahmschicht langsam anzuheben.

4. Vorrichtung zum Einsatz des Verfahrens gemäss Anspruch 1, 2 oder 3, die in einer zylindrischen Wanne (10) mit kreisförmigem Querschnitt und vertikaler Achse untergebracht wird und eine in der Wanne angeordnete und an eine Abflussleitung angeschlossene Sammelschale Mittel zum Abstreifen des Rahms, sodass er in Richtung der Sammelschale geschoben wird, und Mittel zur Betätigung der vertikalen Relativbewegung von Sammelschale und Rahmschicht umfasst dadurch gekennzeichnet, dass die Sammelschale (22) in der Mitte der Wanne (10) und in ihrem oberen Teil angeordnet wird, dass besagte Abstreifmittel aus Drehflügeln (24) bestehen, deren Drehachse mit der Achse der Wanne zusammenfällt und deren Unterkante in einer horizontalen Ebene und etwa auf derselben Höhe wie der obere Rand besagter Wanne liegt, wobei diese Flügel so gebogen sind, dass sie, wenn sie sich drehen, den Rahm vom Umfang der Wanne zu ihrer Mitte hin schieben, und dass die Schale und die Drehflügel auf eine gemeinsame Aufnahme (34) montiert sind.

5. Vorrichtung gemäss Anspruch 4, dadurch gekennzeichnet dass besagte gemeinsame Aufnahme aus einer am Wannendeckel (14) aufgehängten vertikalen Welle (34) besteht, die von einem auf besagten Deckel montierten Motor (46) drehangetrieben wird und mit Hilfe einer Schraubenwinde oder eines Zylinders mit Hand- oder automatischer Betätigung (40, 42) vertikal bewegt werden kann.

6. Vorrichtung gemäss Anspruch 4 oder 5, dadurch gekennzeichnet, dass im unteren Teil der Wanne eine Füllöffnung (20) vorgesehen ist.

## Claims

1. Method for the preparation of milk used in the production of cheese, wherein the milk is allowed to settle in a vat so that a cream layer forms at the milk surface and the cream is separated from the milk by means of a collecting pan arranged in the vat and connected to a discharge piping, and the upper edge of which is flush with the top surface of the cream layer, by sweeping the cream so as to move it toward the collecting pan while ensuring the vertical relative displacement between collecting pan and cream layer, characterized in that the collecting pan (22) is arranged in the centre of the vat (10) and in that the cream is swept by means of rotary blades (24), shaped so as to move the cream from the periphery to the centre of the vat while keeping the lower edge of the blades approximately on the same level as the upper edge of the pan, the blade rotation speed and the vertical displacement speed being slow enough not to create any agitation in the cream layer likely to cause remixing of cream and milk.

2. Method according to claim 1 characterized in that the pan (22) and the rotary blades (24) are lowered in the vat at slow and steady speed.

3. Method according to claim 1 characterized in that the pan (22) and the rotary blades (24) are held on the initial level of the cream layer and in that fresh milk is fed in at a low flow rate at vat bottom in order to slowly raise the cream layer.

4. Device for the implementation of the method according to claim 1, 2 or 3, installed in a cylindrical vat (10) having circular section and vertical axis and including a collecting pan arranged inside the vat and connected to a discharge piping, means for sweeping the cream so as to move it toward the collecting pan, and means for ensuring the vertical relative displacement between collecting pan and cream layer, characterized in that the collecting pan (22) is arranged in the centre and the upper part of vat (10), in that said sweeping means are composed of rotary blades (24) the rotation axis of which is congruent with the centerline of the vat and the lower edge of which is located in a horizontal plane and approximately at the same level as the upper edge of said pan, these blades being curved so that, when they are rotating, they move the cream from the priphery toward the centre of the vat, and in that the pan and the rotary blades are mounted on a commun support (34).

5. Device according to claim 4, characterized in that said commun support consists of a vertical shaft (34) which is suspended from the vat cover (14), rotated by a motor (46) mounted onto said cover and vertically movable by means of a manually or automatically operated jack or cylinder (40, 42).

6. Device according to claim 4 or 5, characterized in that a filling port (20) is provided in the lower part of the vat.